# EUROPÄISCHE PATENTSCHRIFT

(11) **EP 2 490 804 B1**
(45) Veröffentlichungstag und Bekanntmachung des Hinweises auf die Patenterteilung: **13.06.2018**
(21) Anmeldenummer: 10762691.3
(22) Anmeldetag: 07.10.2010
(51) Int. Cl.: B01J 23/42, B01J 23/44, B01J 23/46, B01J 37/02, B01J 37/08, B01J 35/10, C01B 3/38, B01J 23/08

(54) **KATALYSATOR FÜR DIE WASSERDAMPFREFORMIERUNG VON METHANOL**
CATALYST FOR STEAM REFORMING OF METHANOL
CATALYSEUR POUR LE REFORMAGE À LA VAPEUR D'EAU DE MÉTHANOL

(30) Priorität: 19.10.2009 DE 102009045804
(43) Veröffentlichungstag der Anmeldung: 29.08.2012
(73) Patentinhaber: Fraunhofer-Gesellschaft zur Förderung der angewandten Forschung e.V., 80686 München (DE)
(72) Erfinder: MEN, Yong, P.R. China 116023 (CN); ZAPF,Ralf, 55128 Mainz (DE)
(74) Vertreter: WSL Patentanwälte Partnerschaft mbB
(86) Internationale Anmeldenummer: PCT/EP2010/065041
(87) Internationale Veröffentlichungsnummer: WO 2011/047968

(56) Entgegenhaltungen:
- EP-A2- 1 312 412
- DE-A1- 10 010 007
- US-A1- 2005 113 251
- IWASA N ET AL: "NEW CATALYTIC FUNCTIONS OF PD-ZN, PD-GA, PD-IN, PT-ZN, PT-GA AND PT-IN ALLOYS IN THE CONVERSIONS OF METHANOL", CATALYSIS LETTERS, SPRINGER, DORDRECHT; NL, Bd. 54, Nr. 3, 1. September 1998 (1998-09-01), Seiten 119-123, XP000783437, ISSN: 1011-372X, DOI: DOI:10.1023/A:1019056728333 in der Anmeldung erwähnt

## Beschreibung

### Gegenstand der Erfindung

Die vorliegende Erfindung betrifft einen Katalysator für die Wasserdampfreformierung von Methanol, die Herstellung des erfindungsgemäßen Katalysators sowie dessen Verwendung.

### Hintergrund der Erfindung

Bei der Wasserdampfreformierung von Methanol werden an dem erfindungsgemäßen Katalysator Methanol (MeOH) und Wasserdampf (H₂O) an dem Katalysator zu Kohlendioxid (CO₂) und Wasserstoff (H₂) gemäß der nachfolgenden Reaktion umgesetzt.

(i) CH₃OH + H₂O → CO₂ + 3H₂.

Als Nebenreaktion tritt die Spaltung von Methanol in Kohlenmonoxid (CO) und Wasserstoff auf.

(ii) CH₃OH → CO + 2H₂.

Die Erzeugung von Wasserstoff als Energieträger nimmt aufgrund der abnehmenden Verfügbarkeit fossiler Brennstoffe sowie aus ökologischen und ökonomischen Gründen immer mehr an Bedeutung zu. Die Gewinnung von Energie aus Wasserstoff durch Verbrennung in Brennstoffzellen ist eine der wichtigsten Anwendungen.

Die Herstellung von Wasserstoff aus Methanol durch Wasserdampfreformierung von Methanol erfolgt in einem Methanol-Reformer, der entweder stationär oder mobil eingesetzt werden kann. In dem Methanol-Reformer wird ein Methanol-Wassergemisch mit einem Wasser-Methanol-Verhältnis von etwa 1,3 bis 1,5 auf bis zu 20 bar komprimiert, verdampft, auf etwa 250 bis 280 °C überhitzt und gemäß oben genannten Reaktionen umgesetzt. Der Wasserstoff wird mittels einer wasserstoffpermeablen Membran katalytisch oder durch Druckwechseladsorption abgetrennt.

Mobile Methanol-Reformer finden beispielsweise als mobile Wasserstoffquellen für Brennstoffzellen Anwendung, um den Wasserstoff aus Sicherheitsgründen nicht in Druckgastanks mitführen zu müssen. Methanol hat als Ausgangsstoff für die mobile Wasserstoffherstellung den Vorteil, dass er als flüssiger Treibstoff mitgeführt werden kann und damit sicherer ist als Wasserstoff, obwohl auch Methanol aufgrund seiner Giftigkeit und Brennbarkeit nicht völlig gefahrlos zu handhaben ist. Methanol ist aufgrund seines hohen Wasserstoff-Kohlenstoff-Verhältnisses und seines niedrigen Schwefelgehalts als Wasserstoffquelle auch gut geeignet und lässt sich aus erneuerbaren Quellen, wie beispielsweise aus Biomasse, umweltfreundlich und unabhängig von fossilen Brennstoffquellen herstellen.

Zwei grundlegende Anforderungen an einen Katalysator sind eine hohe katalytische Aktivität und eine hohe Selektivität bezüglich des gewünschten Produkts bzw. der gewünschten Produkte. Bei der Wasserdampfreformierung von Methanol zeigt sich eine hohe katalytische Aktivität durch hohe Umsätze, insbesondere bei möglichst niedrigen Temperaturen. Eine gute Selektivität eines Katalysators für die Wasserdampfreformierung von Methanol zeichnet sich dadurch aus, dass das Produkt der Umsetzung von Methanol und Wasser gemäß der gewünschten Hauptreaktion (i) einen hohen Anteil an Kohlendioxid und Wasserstoff aufweist und einen möglichst geringen Anteil an Kohlenmonoxid.

Bekannte Katalysatoren für die Wasserdampfreformierung von Methanol sind beispielsweise die Metalle der Nebengruppen 8 bis 10 (Fe, Ru, Os, Co, Rh, Ir, Ni, Pd, Pt). Diese zeichnen sich jedoch durch eine schlechte Selektivität für die gewünschte Hauptreaktion aus und führen überwiegend zu einem Abbau von Methanol zu Kohlenmonoxid und Wasserstoff.

Untersuchungen mit Kupferkatalysatoren zeigten eine hohe katalytische Aktivität und Selektivität in der Wasserdampfreformierung von Methanol, jedoch besitzen die bekannten Kupferkatalysatoren einige erhebliche Nachteile, einschließlich ihrer pyrophoren Eigenschaften beim Aussetzen an oxidierende Bedingungen und der Tendenz von Kupfer, bei Temperaturen oberhalb von 300 °C zu sintern und dabei die Aktivität zu verlieren.

Iwasa et al., Catalysis Letters 54 (1998), Seiten 119 bis 123, beschreiben weitere Katalysatoren für die Wasserdampfreformierung von Methanol, bei denen Palladium oder Platin als katalytisch aktives Metall auf einen Metalloxidträger aufgebracht ist, wie ZnO, In₂O₃, Ga₂O₃, SiO₂, MgO oder CeO₂. Isawa et al. haben festgestellt, dass die katalytische Aktivität und die Selektivität von Palladium und Platin deutlich verbessert wurden, wenn sie auf den Trägern ZnO, In₂O₃ oder Ga₂O₃ aufgebracht sind. Die Träger alleine zeigten keine Reaktion.

Die US 6,413,449 beschreibt einen Katalysator für die Wasserdampfreformierung von Methanol, der eine Palladium-Zink-Legierung und Zinkoxid als katalytisch aktive Komponenten auf einem Trägermaterial aus Aluminiumoxid, Aluminiumsilicat, Titanoxid, Zirkoniumoxid, einem Zeolith und Gemischen oder gemischten Oxiden davon aufweist

DE10010007 und EP1312412 offenbaren Methanolreformierungskatalysatoren umfassend Indium und Platin oder Palladium.

### Aufgabe der Erfindung

Die Aufgabe der vorliegenden Erfindung bestand darin, einen Katalysator für die Wasserdampfreformierung von Methanol bereitzustellen, der gegenüber bekannten Katalysatoren eine höhere katalytische Aktivität und/oder eine höhere Selektivität für CO₂ besitzt.

### Beschreibung der Erfindung

Gelöst wird diese Aufgabe durch einen Katalysator für die Wasserdampfreformierung von Methanol, welcher ein Trägermaterial aus einem Metalloxid und darauf abgeschieden
a) Indiumoxid (In₂O₃) und wenigstens ein weiteres Metall aus der Gruppe Palladium (Pd), Platin (Pt), Rhodium (Rh) und Iridium (Ir) und/oder
b) eine Legierung aus Indium und wenigstens einem weiteren Metall aus der Gruppe Palladium (Pd), Platin (Pt), Rhodium (Rh) und Iridium (Ir)
als katalytisch aktive Stoffe umfasst, wobei das Verhältnis von dem weiteren Metall (Pd, Pt, Rh oder Ir) zu Indium, ausgedrückt als das Gewichtsverhältnis des weiteren Metalls zu Indiumoxid (In₂O₃) im Bereich von 0,3 bis 0,8 liegt und wobei der Katalysator, bezogen auf das Gesamtgewicht des Katalysators aus Trägermaterial und katalytisch aktiven Stoffen, Indium, ausgedrückt als Indiumoxid (In₂O₃), in einer Menge von 10 bis 45 Gew.-% umfasst.

Es wurde überraschend gefunden, dass ein Katalysator der erfindungsgemäßen Art gegenüber bekannten Vergleichskatalysatoren eine höhere katalytische Aktivität, d.h. eine höhere Umsetzungsgeschwindigkeit für die Produktion von Wasserstoff, und/oder eine höhere Selektivität für das gewünschte Reaktionsprodukt, d.h. Kohlendioxid und Wasserstoff, hat. Beispielsweise konnte mit dem erfindungsgemäßen Katalysator eine gegenüber dem Katalysator der US 6,413,449 dreifach höhere Wasserstoffproduktionsrate bei vergleichbarer Selektivität erzielt werden.

Der erfindungsgemäße Katalysator liegt nach der Herstellung zunächst in einer Form vor, bei der die Indiumkomponente als Indiumoxid neben dem weiteren Metall auf dem Trägermaterial vorhanden ist. Der Katalysator ist in dieser Form einsatzbereit. Durch Röntgenbeugungsuntersuchungen konnte jedoch nachgewiesen werden, dass bei Benutzung des Katalysators unter Reaktionsbedingungen das Indiumoxid zu Indium-Metall reduziert wird und eine Legierung mit dem wenigstens einen weiteren Metall entsteht. Diese Legierung aus Indium und dem weiteren Metall bleibt auch nach der Benutzung des Katalysators erhalten. Es ist daher auch von der Erfindung umfasst, wenn der Katalysator bei bzw. nach der Herstellung zunächst reduziert wird, so dass bereits in dem Handelsprodukt das Indiumoxid als Indium-Metall in Legierung mit dem wenigsten einen weiteren Metall vorliegt.

Die vorliegende Erfindung umfasst daher den Katalysator in der Variante a) mit Indiumoxid neben wenigstens einem weiteren Metall auf dem Trägermaterial, in einer Variante b) mit einer Legierung aus Indium und dem wenigstens einen Material auf dem Trägermaterial sowie mögliche Zwischenstufen und Mischungen davon.

In einer bevorzugten Ausführungsform der Erfindung ist das Trägermaterial des Katalysators Aluminiumoxid (Al₂O₃), welches als Trägermaterial für Katalysatoren unter anderem auch wegen seiner chemischen Beständigkeit und Hitzebeständigkeit bekannt ist und häufig eingesetzt wird. Überwiegend kommt Aluminiumoxid in der Alpha- und Gamma-Modifikation zum Einsatz. Erfindungsgemäß bevorzugt ist das Trägermaterial des erfindungsgemäßen Katalysators Aluminiumoxid in der Gamma-Modifikation. Diese Modifikation besitzt mit Vorteil eine besonders hohe spezifische Oberfläche. Hergestellt wird die Gamma-Modifikation von Aluminiumoxid vorzugsweise durch Kalzinieren von Böhmit. Das Trägermaterial aus Aluminiumoxid in der Gamma-Modifikation besitzt üblicherweise eine spezifische Oberfläche von etwa 200 bis 220 m²/g. Je größer die spezifische Oberfläche des Trägermaterials ist, desto mehr katalytisch aktive Stoffe können auf der Oberfläche abgeschieden werden und desto mehr Reaktionsoberfläche für die katalytische Umsetzung von Methanol und Wasserdampf steht zur Verfügung.

In einer weiteren bevorzugten Ausführungsform des erfindungsgemäßen Katalysators ist das neben Indiumoxid abgeschiedene weitere Material oder das in Legierung mit Indium vorliegende weitere Material Palladium oder Platin. Mit diesen beiden Metallen wurden besonders hohe katalytische Aktivitäten mit hoher Spezifität erzielt.

In einer weiteren bevorzugten Ausführungsform des erfindungsgemäßen Katalysators liegt das Verhältnis von dem weiteren Metall (Pd, Pt, Rh oder Ir) zu Indium, ausgedrückt als das Gewichtsverhältnis des weiteren Metalls zu Indiumoxid (In₂O₃), im Bereich von 0,4 bis 0,6.

Wenn in dieser Anmeldung eine Menge, ein Gewicht oder ein Gewichtsverhältnis für Indium (In) angegeben ist, so bezieht sich dies zu Zwecken der eindeutigen Berechnung, sofern nichts anderes angegeben ist, stets auf das Gewicht von Indiumoxid (In₂O₃), unabhängig davon, ob das Indium in dem jeweiligen Fall tatsächlich in der Form von Indiumoxid oder elementar als Indium-Metall oder in Legierung vorliegt. Bezugnahmen auf ein Gewicht oder Gewichtsverhältnis eines weiteren Metalls (M), womit hierin die Metalle Pd, Pt, Rh oder Ir gemeint sind, beziehen sich hingegen auf das Elementargewicht des jeweiligen Metalls.

Versuche mit unterschiedlichen Gewichtsverhältnissen zwischen dem weiteren Metall, insbesondere Palladium oder Platin, und Indiumoxid bei gleichzeitig konstant gehaltener Gesamtmenge an Indiumoxid auf dem Trägermaterial haben gezeigt, dass bei einem Verhältnis von etwa 0,5 (M:In₂O₃ = 1:2) ein Maximum der katalytischen Aktivität und der Selektivität erreicht werden kann. Insbesondere wird bei diesem Gewichtsverhältnis ein besonders niedriger Kohlenmonoxid-Gehalt erzielt. Beispielsweise wurde bei einem erfindungsgemäßen Katalysator mit Pd/In₂O₃-Verhältnis von 0,5 auf Gamma-Aluminiumoxid-Trägermaterial ein Kohlenmonoxidgehalt unter 1 Vol.-% erreicht.

In einer weiteren bevorzugten Ausführungsform des erfindungsgemäßen Katalysators umfasst der Katalysator, bezogen auf das Gesamtgewicht des Katalysators aus Trägermaterial und katalytisch aktiven Stoffen, Indium in einer Menge von 25 bis 35 Gew.-%, wiederum angegeben als Gewicht von Indiumoxid. Vergleichsversuche mit unterschiedlichen Beladungen von katalytisch aktiven Stoffen auf dem Trägermaterial, vorzugsweise auf Aluminiumoxid, haben insbesondere für Palladium und Platin als weitere Metalle gezeigt, dass die Selektivität für Kohlendioxid und damit eine Minimierung der Kohlenmonoxid-Erzeugung durch eine hohe Beladung des Trägermaterials mit den katalytisch aktiven Stoffen erreicht werden kann. Mit steigenden Mengen an Indium, ausgedrückt als Indiumoxid, von etwa 10 Gew.-% bis etwa 30 Gew.-% auf dem Katalysator konnte eine deutliche Zunahme der Selektivität für Kohlendioxid und eine Abnahme der unerwünschten Erzeugung von Kohlenmonoxid beobachtet werden. Beispielsweise konnte bei einem erfindungsgemäßen Katalysator mit Palladium und Indiumoxid auf Aluminiumoxid-Trägermaterial bei einem Verhältnis von Pd/In₂O₃ von 0,5 und bei einer Beladung des Katalysators mit 20 Gew.-% In₂O₃ gegenüber einer Beladung mit 10 Gew.-% In₂O₃ eine Reduzierung der Kohlenmonoxid-Herstellung auf deutlich weniger als die Hälfte festgestellt werden. Bei einer Beladung mit 30 Gew.-% In₂O₃ wurde die Kohlenmonoxid-Erzeugung noch einmal reduziert.

Geeigneterweise umfasst der erfindungsgemäße Katalysator, bezogen auf das Gesamtgewicht des Katalysators aus Trägermaterial und katalytisch aktiven Stoffen, das weitere Metall in einer Menge von 5 bis 25 Gew.-%, vorzugsweise 10 bis 20 Gew.-%, besonders bevorzugt 12 bis 18 Gew.-%.

Weiterhin umfasst ein erfindungsgemäß geeigneter Katalysator, bezogen auf das Gesamtgewicht des Katalysators aus Trägermaterial und katalytisch aktiven Stoffen, das Trägermaterial in einer Menge von 30 bis 80 Gew.-%, vorzugsweise 40 bis 70 Gew.-%, besonders bevorzugt 50 bis 60 Gew.-%.

In Vergleichsversuchen hat sich beispielsweise ein Katalysator aus 55 Gew.-% Gamma-Aluminiumoxid-Trägermaterial mit einer Beladung von 30 Gew.-% Indiumoxid (In₂O₃) und 15 Gew.-% Palladium (Pd) als besonders vorteilhaft erwiesen. Dieser Katalysator zeigte in der Wasserdampfreformierung von Methanol eine sehr hohe katalytische Aktivität und eine sehr hohe Selektivität für Kohlendioxid bei gleichzeitig sehr geringer Kohlenmonoxid-Erzeugung.

Wenn im Zusammenhang mit dem erfindungsgemäßen Katalysator von einer hohen katalytischen Aktivität und Selektivität die Rede ist, so versteht es sich von selbst, dass sich diese Angaben auf die Durchführung der Wasserdampfreformierung von Methanol unter geeigneten Reaktionsbedingungen, insbesondere bei einer geeigneten, vorzugsweise einer optimierten Reaktionstemperatur beziehen. Die geeigneten Reaktionsbedingungen können in Abhängigkeit von dem Katalysator, dem Aufbau des verwendeten Methanol-Reformers bzw. des Reaktors sowie den weiteren Reaktionsbedingungen, wie beispielsweise den Mengen und Strömungsgeschwindigkeiten von Methanol und Wasserdampf, variieren. Es liegt jedoch im Können des Fachmanns auf dem Gebiet, für einen vorgegebenen Katalysator die Reaktionsbedingungen der Wasserdampfreformierung von Methanol hinsichtlich der gewünschten Umsetzungsgeschwindigkeiten und Selektivitäten durch einfache Experimente einzustellen und zu optimieren. Eine Festlegung auf bestimmte Reaktionsbedingungen ist daher hierin nicht zweckmäßig. Im Allgemeinen liegen die Reaktionstemperaturen bei der Wasserdampfreformierung von Methanol an den erfindungsgemäßen Katalysatoren jedoch im Bereich von 300 bis 500 °C, vorzugsweise 350 bis 450 °C.

Die vorliegende Erfindung umfasst auch die Herstellung des erfindungsgemäßen Katalysators durch
a) Aufbringen und Trocknen einer wässrigen, alkoholischen oder wässrigalkoholischen Suspension des Metalloxidträgermaterials auf ein Substrat und anschließendes Kalzinieren des Metalloxidträgermaterials auf dem Substrat bei einer Temperatur über 300 °C, vorzugsweise über 400 °C, besonders bevorzugt über 500 °C,
b) Imprägnieren des Metalloxidträgermaterials mit Lösungen von Indiumsalz und Salz des weiteren Metalls, Trocknen der Salze auf dem Metalloxidträgermaterial und anschließendes Kalzinieren bei einer Temperatur über 250 °C, vorzugsweise über 300 °C, besonders bei etwa 350 °C für einen Zeitraum von mehr als 3 Stunden, vorzugsweise mehr als 4,5 Stunden, besonders bevorzugt mehr als 5,5 Stunden.

Als Salzlösungen für das Imprägnieren des Metalloxidträgermaterials mit Indium und dem weiteren Metall eignen sich beispielsweise die Lösungen der Nitrate der jeweiligen Metalle, H₂PtCl₆ 6H₂O-Lösung, aber auch eine Vielzahl weiterer Salzlösungen, die dem Fachmann bekannt sind oder die er durch einfache Versuche auffinden kann. Die Salzlösungen können getrennt nacheinander auf das Metalloxidträgermaterial aufgebracht werden, vorzugsweise werden sie jedoch vor dem Imprägnieren gemischt und als Mischung gemeinsam auf das Metalloxidträgermaterial aufgebracht.

### Beispiele

Die vorliegende Erfindung wird nun nachfolgend anhand von Beispielen weiter erläutert, die jedoch nicht die Erfindung beschränken sollen.

### Beispiel 1: Herstellung eines erfindungsgemäßen Katalysatorsystems

### Abscheidung von Aluminiumoxid-Trägermaterial auf einer Reaktoroberfläche

Im Labormaßstab wird eine mit 14 Mikrokanälen versehene Reaktorplatte im sogenannten Washcoat-Prozess beschichtet. Die Mikrokanäle haben jeweils eine Länge von 2,5 cm, eine Breite von 500 µm und eine Tiefe von 250 µm.

### 1. Schritt: Herstellung einer Suspension von Al₂O₃

a) 5 Gew.-% Binder (Polyvinylalkohol-PVA 40-88, FLUKA) werden in 74 Gew.-% deionisiertem H₂O unter Rühren bei 65 °C für drei Stunden gelöst und danach über Nacht ohne Rühren stehen gelassen.
b) 20 Gew.-% Al₂O₃ und 1 Gew.-% konzentrierte Essigsäure werden hinzugegeben und das Gemisch noch einmal für drei Stunden bei 65 °C gerührt. Anschließend wird die Mischung für weitere drei Tage bei Raumtemperatur gerührt, bis eine homogene Suspension erhalten wird.

Eine Variation der Mengenverhältnisse von Binder-Lösung zu Al₂O₃-Suspension erlaubt es, die später erhaltene Dicke der Aluminiumoxidschicht auf der Reaktoroberfläche einzustellen bzw. zu beeinflussen.

### 2. Schritt: Aufbringen der Suspension auf die Oberfläche der Mikrokanäle

Zunächst werden nicht zu beschichtende Bereiche der Reaktoroberfläche maskiert bzw. abgedeckt und die Suspension anschließend auf die Kanäle aufgetragen. Überschüssige Suspension wird abgezogen.

### 3. Schritt: Trocknen und Kalzinieren der Beschichtungen

Die Proben werden nach dem Aufbringen der Suspension auf die Oberflächen der Mikrokanäle an der Luft getrocknet und anschließend im Ofen mit folgendem Temperaturprogramm kalziniert:
in 120 Minuten aufheizen auf 120 °C,
120 Minuten bei 120 °C halten,
in 300 Minuten aufheizen auf 600 °C und
120 Minuten bei 600 °C halten.

Anhand des Gewichtes der beschichteten Platte wird die Menge der Al₂O₃-Beschichtung bestimmt. Auf der Grundlage dieses Wertes wird die Zusammensetzung der Imprägnierlösung festgelegt.

### Imprägnierung des Aluminiumoxid-Trägermaterials mit katalytisch aktiven Stoffen

Bei der zuvor durchgeführten Abscheidung von Aluminiumoxid auf der Reaktoroberfläche liegt die abgeschiedene Menge an Aluminiumoxid üblicherweise im Bereich von 7,5 bis 10 mg bzw. 0,021 mg/mm² bis 0,057 mg/mm². Ein geeignetes Flüssigkeitsvolumen für die Imprägnierung des verwendeten Plattentyps mit der erhaltenen abgeschiedenen Menge an Aluminiumoxid liegt bei etwa 20 µl. Die Konzentrationen der durch Imprägnierung aufzubringenden Salze von Indium und weiterem Metall, beispielsweise Platin oder Palladium, werden entsprechend dem gewünschten Gewichtsverhältnis und der gewünschten Beladung des fertigen Katalysators unter Berücksichtigung der vorgenannten Menge an einzusetzender Imprägnierlösung von etwa 20 µl eingestellt. Die Menge an Imprägnierlösung wird dann gleichmäßig auf die Aluminiumoxid-Beschichtung auf der Reaktoroberfläche aufgetragen.

Als Imprägnierlösungen werden beispielsweise wässrige Lösungen von Indium(III)-Nitrat-Hydrat und Palladiumnitrat oder Hexachloroplatinsäure-Hexahydrat verwendet.

Nach dem Imprägnieren werden die Platten an Luft bei Raumtemperatur zunächst getrocknet und anschließend mit dem folgenden Temperaturprogramm kalziniert:
in 120 Minuten aufheizen auf 120 °C,
120 Minuten bei 120 °C halten,
in 120 Minuten aufheizen auf 350 °C und
360 Minuten bei 350 °C halten.

Nach dem Kalzinieren werden die Platten erneut gewogen, um die aufgebrachte Beladung des Trägermaterials mit katalytisch aktiven Stoffen zu überprüfen.

### Beispiel 2: Wasserdampfreformierung von Methanol

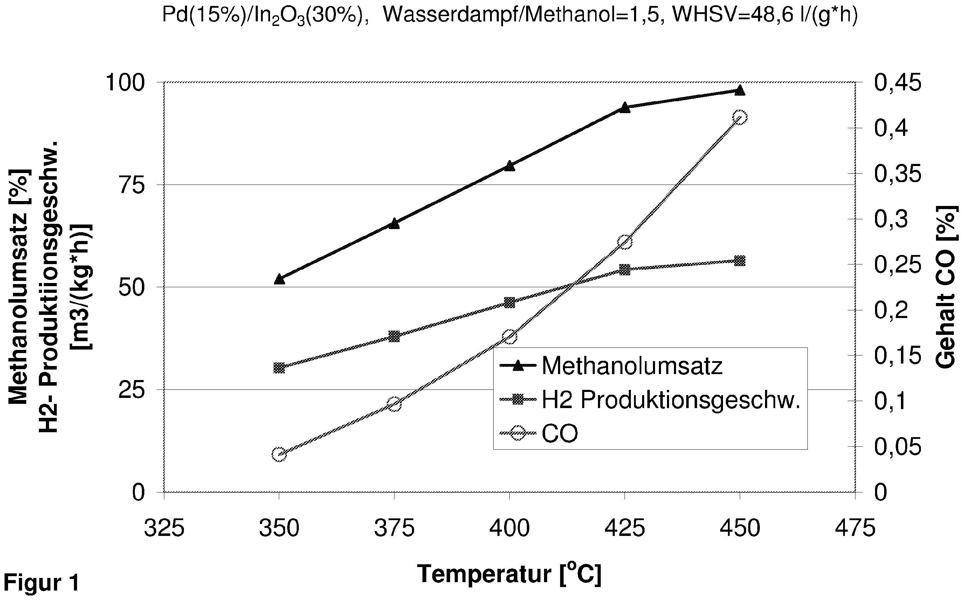

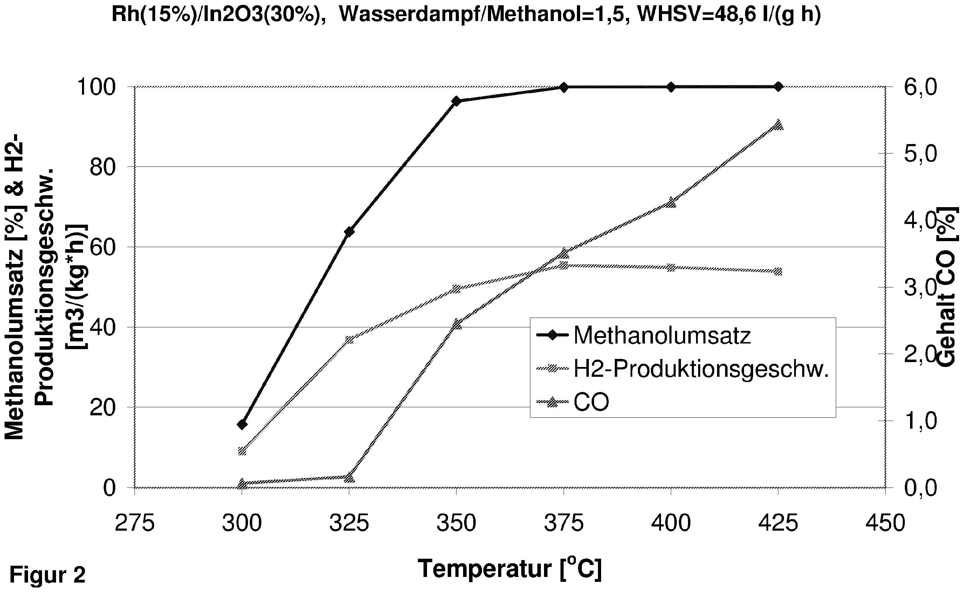

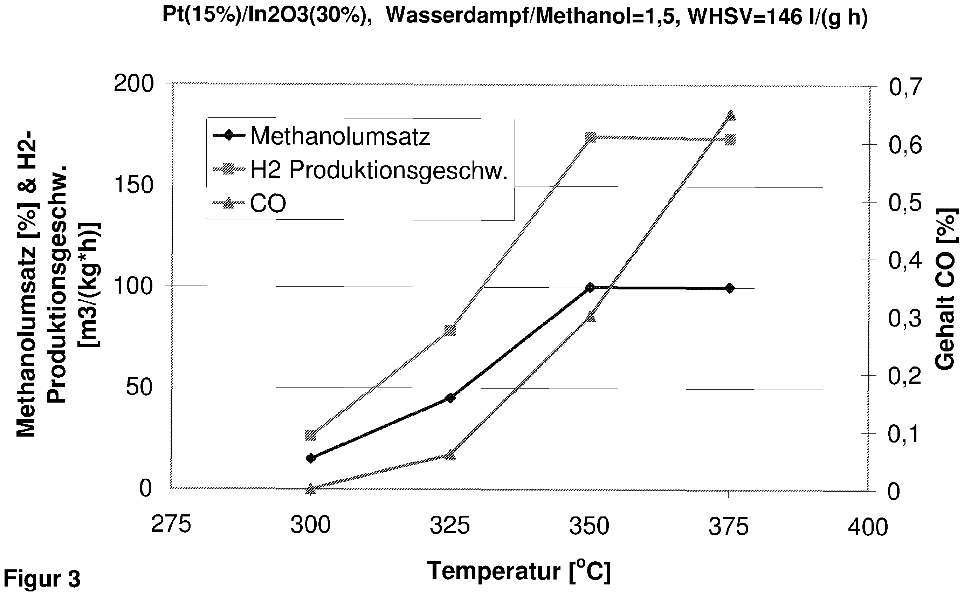

Erfindungsgemäße Katalysatoren wurden gemäß Beispiel 1 auf Gamma-Aluminiumoxid-Trägermaterial auf entsprechenden Reaktorplatten hergestellt. Mit den erfindungsgemäßen Katalysatoren auf den Reaktorplatten wurden Versuche der Wasserdampfreformierung von Methanol durchgeführt. Die Ergebnisse sind in den nachfolgenden Tabellen 1 und 2 und in den Figuren 1 bis 4 wiedergegeben. Das molare Verhältnis von Wasserdampf zu Methanol in dem zugeführten Methanol-Wasserdampf-Gemisch [S/C], die stündliche Raumgeschwindigkeit (WHSV, weight hourly space velocity) und die Temperatur sind als Versuchsparameter angegeben.

Eingesetzte Katalysatoren:

| | | |
|---|---|---|
| (A1) | 15 Pd/30 In₂O₃ | (Figur 1) |
| (A2) | 15 Rh/30 In₂O₃ | (Figur 2) |
| (A3) | 15 Pt/30 In₂O₃ | (Figur 3) |
| | | |
| (B1) | 15 Pt/30 In₂O₃ | (Figur 4) |
| (B2) | 15 Pt/5 In₂O₃ | (Figur 4) |
| (B3) | 15 Pt/15 In₂O₃ | (Figur 4) |

B2 und B3 stellen Vergleichsbeispiele dar. Die Zahlen vor dem jeweiligen katalytisch aktiven Stoff (Pt, Rh bzw. In₂O₃) bedeuten Gewichtsprozent des jeweiligen Stoffs vom Gesamtgewicht des Katalysators, bestehend aus Trägermaterial und katalytisch aktiven Stoffen.

**Tabelle 1**

| Katalysator | Wasserdampf /Methanol [S/C] | WHSV [l/(gh)] | Temperatur [°C] | H₂-Prod.-Geschw. [m³/(kg h)] | CO-Gehalt [%] | Methanolumsatz [%] |
|---|---|---|---|---|---|---|
| A1: 15Pd30In2O3 | 1,5 | 48,6 | 350 | 30,3 | 0,04 | 52,0 |
| | 1,5 | 48,6 | 375 | 37,9 | 0,1 | 65,6 |
| | 1,5 | 48,6 | 400 | 46,2 | 0,17 | 79,6 |
| | 1,5 | 48,6 | 425 | 54,2 | 0,27 | 93,9 |
| | 1,5 | 48,6 | 450 | 56,4 | 0,41 | 98,1 |
| | | | | | | |
| A2: 15Rh30In2O3 | 1,5 | 48,6 | 300 | 9,1 | 0,06 | 15,7 |
| | 1,5 | 48,6 | 325 | 37,1 | 0,16 | 63,7 |
| | 1,5 | 48,6 | 350 | 54 | 2,45 | 96,3 |
| | 1,5 | 48,6 | 375 | 55,4 | 3,5 | 99,8 |
| | 1,5 | 48,6 | 400 | 54,9 | 4,3 | 99,9 |
| | 1,5 | 48,6 | 425 | 53,9 | 5,4 | 99,9 |
| | | | | | | |
| A3: 15Pt30In2O3 | 1,5 | 146 | 300 | 26,3 | 0,02 | 15,0 |
| | 1,5 | 146 | 325 | 78,6 | 0,06 | 45,0 |
| | 1,5 | 146 | 350 | 174 | 0,3 | 100 |
| | 1,5 | 146 | 375 | 174 | 0,65 | 100 |
| | 1,5 | 195 | 375 | 230 | 0,6 | 100 |

**Tabelle 2**

| Katalysator | Wasserdampf /Methanol [S/C] | WHSV [l/(g h)] | Temperatur [°C] | H₂-Prod.-Geschw. [m³/(kg h)] | CO-Gehalt [%] | Methanolumsatz [%] |
|---|---|---|---|---|---|---|
| B1: 15Pt30In2O3 | 1,5 | 48,6 | 300 | 19,8 | 0,07 | 34,0 |
| | 1,5 | 48,6 | 325 | 55,7 | 0,4 | 96,0 |
| | 1,5 | 48,6 | 350 | 57,9 | 0,5 | 100 |
| | 1,5 | 48,6 | 375 | 57,0 | 1,4 | 100 |
| | | | | | | |
| B2: 15Pt5In2O3 | 1,5 | 48,6 | 300 | 15,9 | 2,1 | 30,0 |
| | 1,5 | 48,6 | 325 | 23,7 | 4,5 | 46,0 |
| | 1,5 | 48,6 | 350 | 39,0 | 7,6 | 77,0 |
| | 1,5 | 48,6 | 375 | 44,4 | 10,6 | 92,0 |
| | | | | | | |
| B3: 15Pt15In2O3 | 1,5 | 48,6 | 300 | 52,6 | 0,6 | 92,0 |
| | 1,5 | 48,6 | 325 | 57,7 | 1,2 | 100 |
| | 1,5 | 48,6 | 350 | 56,8 | 1,8 | 100 |
| | 1,5 | 48,6 | 375 | 56,6 | 2,6 | 100 |

Die Ergebnisse der Versuche zeigen, dass die optimale Reaktionstemperatur für jeden Katalysator etwas unterschiedlich sein kann, wobei das optimale Verhältnis von katalytischer Aktivität zu Selektivität für Kohlendioxid (Minimierung der Kohlenmonoxid-Bildung) durch einfache Messreihen ermittelt werden kann. Bei einem Methanolumsatz von 100 % ist eine Steigerung der Wasserstoffherstellung aufgrund des vollständigen Eduktverbrauchs nur noch durch eine Erhöhung der Menge an zugeführtem Wasserdampf-Methanol-Gemisch pro Zeiteinheit möglich.

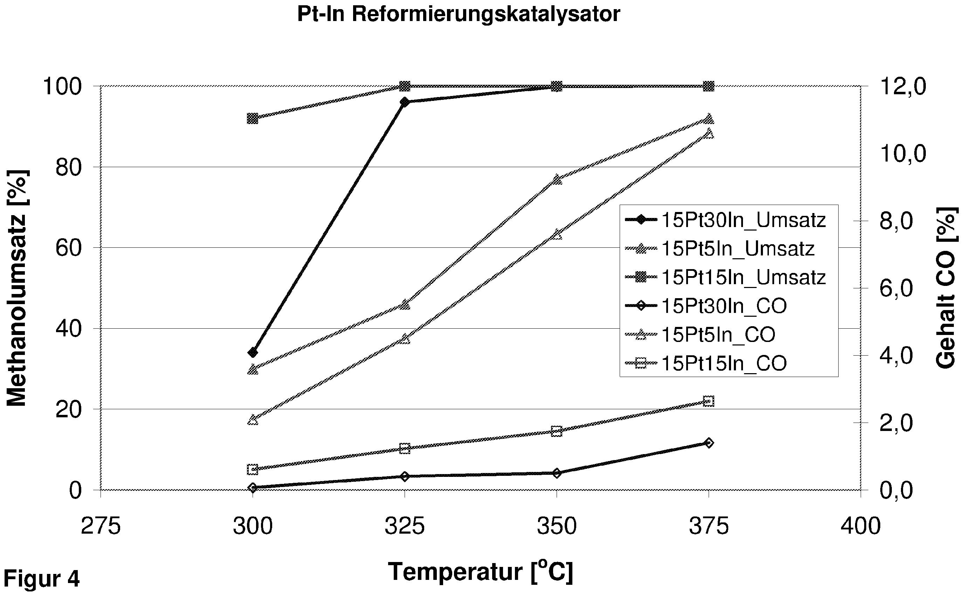

Die Vergleichsversuche mit den Katalysatoren B1, B2 und B3 gemäß Figur 4 zeigen, dass bei einem Verhältnis von Platin zu Indium, ausgedrückt als das Gewichtsverhältnis von Platin zu Indiumoxid, von etwa 0,5 und einer Menge von 30 Gew.-% Indium, ebenfalls ausgedrückt als Indiumoxid, ab einer Reaktionstemperatur von etwa 325 °C eine Maximierung der katalytischen Aktivität, gemessen am Methanolumsatz, bei gleichzeitig äußerst hoher Selektivität, angegeben als ein sehr niedriger Kohlenmonoxidgehalt, erreicht wird. Bei einem Gewichtsverhältnis von Platin zu Indium, ausgedrückt als Indiumoxid, von 1,0 und einem niedrigeren Indiumgehalt von 15 Gew.-% wird ebenfalls eine sehr hohe katalytische Aktivität erzielt, jedoch bei gleichzeitig etwas schlechterer Selektivität für Kohlendioxid, ausgedrückt als ein höherer Gehalt an entstehendem Kohlenmonoxid. Bei einer weiteren Herabsetzung des Indiumgehalts in dem Katalysator wird die bei den vorgenannten Katalysatoren erzielte hohe katalytische Aktivität gar nicht mehr erreicht, allenfalls erhält man erst bei der hohen Temperatur von 375 °C einen Methanolumsatz von etwa 90 %. Die Selektivität dieser Kombination ist insgesamt über den gesamten getesteten Temperaturbereich deutlich schlechter als bei den vorgenannten Katalysatoren und verschlechtert sich mit steigender Temperatur, während der Methanolumsatz zunimmt.

## Patentansprüche

1. Katalysator für die Wasserdampfreformierung von Methanol, welcher ein Trägermaterial aus einem Metalloxid und darauf abgeschieden
a) Indiumoxid (In₂O₃) und wenigstens ein weiteres Metall aus der Gruppe Palladium (Pd), Platin (Pt), Rhodium (Rh) und Iridium (Ir) und/oder
b) eine Legierung aus Indium und wenigstens einem weiteren Metall aus der Gruppe Palladium (Pd), Platin (Pt), Rhodium (Rh) und Iridium (Ir)
als katalytisch aktive Stoffe umfasst, wobei das Verhältnis von dem weiteren Metall (Pd, Pt, Rh oder Ir) zu Indium, ausgedrückt als das Gewichtsverhältnis des weiteren Metalls zu Indiumoxid (In₂O₃) im Bereich von 0,3 bis 0,8 liegt und wobei der Katalysator, bezogen auf das Gesamtgewicht des Katalysators aus Trägermaterial und katalytisch aktiven Stoffen, Indium, ausgedrückt als Indiumoxid (In₂O₃), in einer Menge von 10 bis 45 Gew.-% umfasst.

2. Katalysator nach Anspruch 1, **dadurch gekennzeichnet, dass** das Trägermaterial Aluminiumoxid (Al₂O₃), vorzugsweise Aluminiumoxid in der Gamma-Modifikation, besonders bevorzugt Aluminiumoxid in der Gamma-Modifikation mit einer spezifischen Oberfläche von 200 - 220 m²/g ist.

3. Katalysator nach einem der vorangegangenen Ansprüche, **dadurch gekennzeichnet, dass** das neben Indiumoxid abgeschiedene weitere Metall oder das in einer Legierung mit Indium abgeschiedene weitere Metall Palladium oder Platin ist.

4. Katalysator nach einem der vorangegangenen Ansprüche, **dadurch gekennzeichnet, dass** das Verhältnis von dem weiteren Metall (Pd, Pt, Rh oder Ir) zu Indium, ausgedrückt als das Gewichtsverhältnis des weiteren Metalls zu Indiumoxid (In₂O₃) im Bereich von 0,4 bis 0,6 liegt.

5. Katalysator nach einem der vorangegangenen Ansprüche, **dadurch gekennzeichnet, dass** der Katalysator, bezogen auf das Gesamtgewicht des Katalysators aus Trägermaterial und katalytisch aktiven Stoffen, Indium, ausgedrückt als Indiumoxid (In₂O₃), in einer Menge von 25 bis 35 Gew.-% umfasst.

6. Katalysator nach einem der vorangegangenen Ansprüche, **dadurch gekennzeichnet, dass** der Katalysator, bezogen auf das Gesamtgewicht des Katalysators aus Trägermaterial und katalytisch aktiven Stoffen, das weitere Metall in einer Menge von 5 bis 25 Gew.-%, vorzugsweise 10 bis 20 Gew.-%, besonders bevorzugt 12 bis 18 Gew.-% umfasst.

7. Katalysator nach einem der vorangegangenen Ansprüche, **dadurch gekennzeichnet, dass** der Katalysator, bezogen auf das Gesamtgewicht des Katalysators aus Trägermaterial und katalytisch aktiven Stoffen, das Trägermaterial in einer Menge von 30 bis 80 Gew.-%, vorzugsweise 40 bis 70 Gew.-%, besonders bevorzugt 50 bis 60 Gew.-% umfasst.

8. Katalysator nach einem der vorangegangenen Ansprüche, hergestellt oder herstellbar durch
a) Aufbringen und Trocknen einer wässrigen, alkoholischen oder wässrigalkoholischen Suspension des Metalloxidträgermaterials auf ein Substrat und anschließendes Kalzinieren des Metalloxidträgermaterials auf dem Substrat bei einer Temperatur über 300 °C, vorzugsweise über 400 °C, besonders bevorzugt über 500 °C,
b) Imprägnieren des Metalloxidträgermaterials mit Lösungen von Indiumsalz und Salz des weiteren Metalls, Trocknen der Salze auf dem Metalloxidträgermaterial und anschließendes Kalzinieren bei einer Temperatur über 250 °C, vorzugsweise über 300 °C, besonders bei etwa 350 °C für einen Zeitraum von mehr als 3 Stunden, vorzugsweise mehr als 4,5 Stunden, besonders bevorzugt mehr als 5,5 Stunden.

9. Verwendung eines Katalysators nach einem der vorangegangenen Ansprüche für die Wasserdampfreformierung von Methanol.

## Claims

1. Catalyst for steam reformation of methanol which includes a carrier material comprising a metal oxide and deposited thereon:
a) indium oxide (In₂O₃) and at least one further metal from the group of palladium (Pd), platinum (Pt), rhodium (Rh) and iridium (Ir) and/or
b) an alloy comprising indium and at least one further metal from the group of palladium (Pd), platinum (Pt), rhodium (Rh) and iridium (Ir),
as catalytically active substances,
wherein the ratio of the further metal (Pd, Pt, Rh or Ir) in relation to indium, expressed as the weight ratio of the further metal to indium oxide (In₂O₃), is in the range of 0.3 to 0.8, and wherein the catalyst, in relation to the total weight of the catalyst of carrier material and catalytically active substances, includes indium, expressed as indium oxide (In₂O₃) in an amount of from 10 to 45 % by weight.

2. Catalyst of claim 1 **characterized in that** the carrier material is aluminum oxide (Al₂O₃), preferably aluminum oxide in gamma form, particularly preferably aluminum oxide in gamma form having a specific surface area of 200 - 220 m²/g.

3. Catalyst according to one of the preceding claims **characterized in that** the further metal deposited besides indium oxide or the further metal deposited in an alloy with indium, is palladium or platinum.

4. Catalyst according to one of the preceding claims **characterized in that** the ratio of the further metal (Pd, Pt, Rh or Ir) in relation to indium, expressed as the weight ratio of the further metal to indium oxide (In₂O₃), is in the range of from 0.4 to 0.6.

5. Catalyst according to one of the preceding claims **characterized in that** the catalyst, in relation to the total weight of the catalyst of carrier material and catalytically active substances, includes indium, expressed as indium oxide (In₂O₃) in an amount of 25 to 35 % by weight.

6. Catalyst according to one of the preceding claims **characterized in that** the catalyst, in relation to the total weight of the catalyst of carrier material and catalytically active substances, includes the further metal in an amount of 5 to 25 % by weight, preferably 10 to 20 % by weight, particularly preferably 12 to 18 % by weight.

7. Catalyst according to one of the preceding claims **characterized in that** the catalyst, in relation to the total weight of the catalyst of carrier material and catalytically active substances, includes the carrier material in an amount of 30 to 80 % by weight, preferably 40 to 70 % by weight, particularly preferably 50 to 60 % by weight.

8. Catalyst according to one of the preceding claims, produced or producible by:
a) applying and drying an aqueous, alcoholic or aqueous-alcoholic suspension of the metal oxide carrier material to a substrate and then calcining the metal oxide carrier material on the substrate at a temperature above 300°C, preferably above 400°C, particularly preferably above 500°C,
b) impregnating the metal oxide carrier material with solutions of indium salt and salt of the further metal, drying the salts on the metal oxide carrier material and then calcining at a temperature above 250°C, preferably above 300°C, particularly preferably at about 350°C for a period of more than 3 hours, preferably more than 4.5 hours, particularly preferably more than 5.5 hours.

9. Use of a catalyst according to one of the preceding claims for steam reformation of methanol.

## Revendications

1. Catalyseur pour le vaporeformage du méthanol, qui comprend un matériau support à base d'un oxyde métallique et, déposés sur ce dernier en tant que substances catalytiquement actives,
a) de l'oxyde d'indium (In₂O₃) et au moins un métal supplémentaire du groupe choisi parmi le palladium (Pd), le platine (Pt), le rhodium (Rh) et l'iridium (Ir) et/ou
b) un alliage d'indium et d'au moins un métal supplémentaire du groupe choisi parmi le palladium (Pd), le platine (Pt), le rhodium (Rh) et l'iridium (Ir),
le rapport entre le métal supplémentaire (Pd, Pt, Rh ou Ir) et l'indium, exprimé par le rapport en poids entre le métal supplémentaire et l'oxyde d'indium (In₂O₃), étant compris dans la plage de 0,3 à 0,8, et le catalyseur comprenant, par rapport au poids total du catalyseur constitué du matériau support et des substances catalytiquement actives, de l'indium, exprimé en oxyde d'indium (In₂O₃), en une quantité de 10 à 45 % en poids.

2. Catalyseur selon la revendication 1, **caractérisé en ce que** le matériau support est l'oxyde d'aluminium (Al₂O₃), de préférence l'oxyde d'aluminium gamma, d'une manière particulièrement préférée l'oxyde d'aluminium gamma présentant une aire spécifique de 200 à 220 m²/g;

3. Catalyseur selon l'une des revendications précédentes, **caractérisé en ce que** le métal supplémentaire déposé en plus de l'oxyde d'indium, ou le métal supplémentaire déposé dans un alliage avec l'indium, est le palladium ou le platine.

4. Catalyseur selon l'une des revendications précédentes, **caractérisé en ce que** le rapport entre le métal supplémentaire (Pd, Pt, Rh ou Ir) et l'indium, exprimé par le rapport en poids entre le métal supplémentaire et l'oxyde d'indium (In₂O₃), est compris dans la plage de 0,4 à 0,6.

5. Catalyseur selon l'une des revendications précédentes, **caractérisé en ce que** le catalyseur comprend, par rapport au poids total du catalyseur constitué du matériau support et de substances catalytiquement actives, de l'indium, exprimé en oxyde d'indium (In₂O₃), en une quantité de 25 à 35 % en poids.

6. Catalyseur selon l'une des revendications précédentes, **caractérisé en ce que** le catalyseur comprend, par rapport au poids total du catalyseur constitué du matériau support et de substances catalytiquement actives, le métal supplémentaire en une quantité de 5 à 25 % en poids, de préférence de 10 à 20 % en poids, d'une manière particulièrement préférée de 12 à 18 % en poids.

7. Catalyseur selon l'une des revendications précédentes, **caractérisé en ce que** le catalyseur comprend, par rapport au poids total du catalyseur constitué d'un matériau support et de substances catalytiquement actives, le matériau support en une quantité de 30 à 80 % en poids, de préférence de 40 à 70 % en poids, d'une manière particulièrement préférée de 50 à 60 % en poids.

8. Catalyseur selon l'une des revendications précédentes, fabriqué ou pouvant être fabriqué
a) par application et séchage d'une suspension aqueuse, alcoolique ou hydroalcoolique du matériau support oxyde métallique sur un substrat, puis calcination du matériau support oxyde métallique sur le substrat à une température supérieure à 300°C, de préférence supérieure à 400°C, d'une manière particulièrement préférée supérieure à 500°C,
b) par imprégnation du matériau support oxyde métallique avec des solutions d'un sel d'indium et d'un sel du métal supplémentaire, séchage des sels sur le matériau support oxyde métallique, puis calcination à une température supérieure à 250 °C, de préférence supérieure à 300 °C, en particulier d'environ 350 °C, sur une durée supérieure à 3 heures, de préférence supérieure à 4,5 heures, d'une manière particulièrement préférée supérieure à 5,5 heures.

9. Utilisation d'un catalyseur selon l'une des revendications précédentes pour le vaporeformage du méthanol.
